# EUROPEAN PATENT APPLICATION

(11) **EP 4 793 752 A1**
(43) Date of publication of application: **19.08.2026**
(21) Application number: 24913559.1
(22) Date of filing: 04.12.2024
(51) Int. Cl.: G06F 3/16, G06F 3/0482, G06F 3/0484, G06F 3/04815, G06F 3/04817, H04B 7/06, H04M 1/72448, H04M 1/72469, G10L 15/22

(54) **ELECTRONIC DEVICE FOR ADAPTIVELY PROVIDING WIDGET AND CONTROL METHOD THEREOF**

(30) Priority: 29.12.2023 KR 20230196451; 19.02.2024 KR 20240023576
(71) Applicant: Samsung Electronics Co., Ltd., Suwon-si, Gyeonggi-do 16677 (KR)
(72) Inventor: PARK, Celine, Suwon-si Gyeonggi-do 16677 (KR); HUR, Boyoon, Suwon-si Gyeonggi-do 16677 (KR); KO, Heejin, Suwon-si Gyeonggi-do 16677 (KR); SO, Yongjin, Suwon-si Gyeonggi-do 16677 (KR)
(74) Representative: Appleyard Lees IP LLP
(86) International application number: PCT/KR2024/019729
(87) International publication number: WO 2025/143616

(57) **Abstract**

An electronic device is disclosed. The present electronic device may include: a memory in which an application is stored; a display; and one or more processors connected to the memory and the display and controlling the electronic device, wherein the processors: control the display to display information related to a function of the application through a widget; identify a widget corresponding to a user utterance voice on the basis of voice recognition for the user utterance voice when the user utterance voice is acquired; and control the display to change a display state of the identified widget on the basis of the user utterance voice.

## Description

### CONTROL METHOD THEREOF

### [Technical Field]

The disclosure relates to an electronic apparatus and a control method thereof, and more particularly to an electronic apparatus for adaptively providing a widget and a control method thereof.

### [Background Art]

With developments in electronic technology, electronic apparatus that provide various functions are being developed. In particular, recently, electronic apparatuses that provide various widgets or background screens, and provide convenience functions according to user uttered voices are being provided.

For example, electronic apparatuses such as a TV may provide content such as movies, dramas, or the like selected by a user, but if the user is not actively using the TV, functions such as a screensaver, an ambient, or an always on voice (AoV) may be provided.

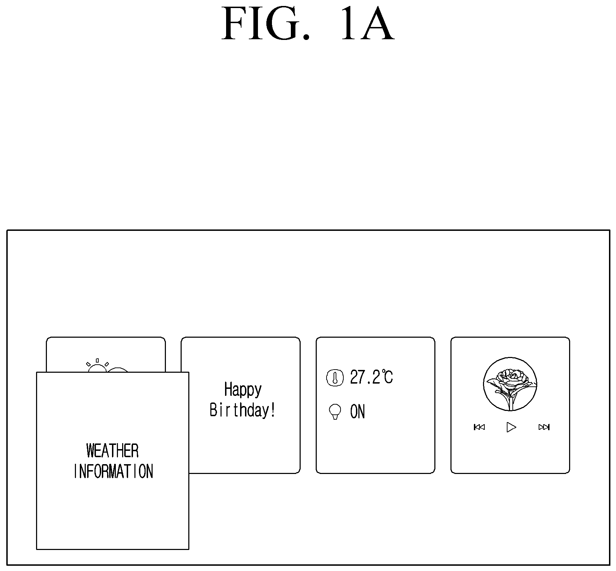

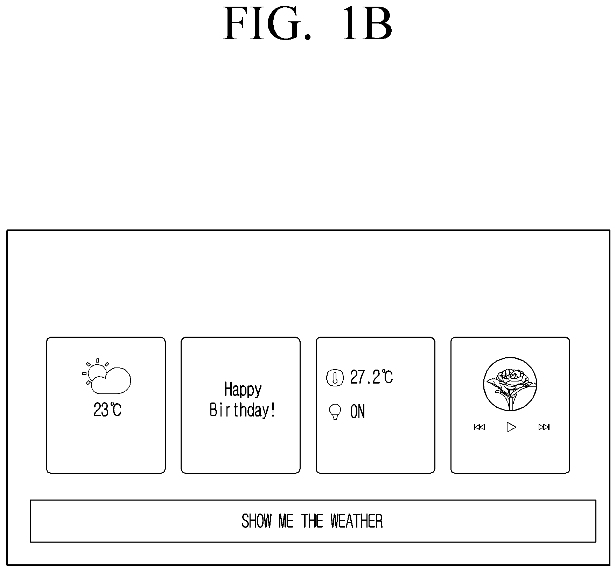

However, electronic apparatuses of prior art caused user inconvenience with operations such as obscuring a specific area based on an operation according to a user uttered voice. For example, electronic apparatuses of prior art deteriorated an aesthetic effect by providing weathers information while obscuring an existing widget according to a request for weather information by the user as shown in FIG. 1A. Alternatively, because electronic apparatuses of prior art merely displayed an utterance of the user as-is in a pre-set area, there was low utilization of widgets that were already being displayed, as shown in FIG. 1B.

In addition, there has been a need to provide widgets more adaptively, and provide various utilization methods for widgets

### [Disclosure]

### [Technical Solution]

According to an embodiment of the disclosure for achieving an object as described above, an electronic apparatus includes memory stored with an application, a display, and one or more processors configured to control the electronic apparatus by being connected to the memory and the display, and the processor is configured to control the display to display information associated with a function of the application as a widget, identify, based on a user uttered voice being obtained, a widget corresponding to the user uttered voice based on voice recognition with respect to the user uttered voice, and control the display to change a display state of the identified widget based on the user uttered voice.

In addition, the memory may store a plurality of applications, and the processor may be configured to control the display to display information associated with functions of the plurality of applications as a plurality of widgets, identify, based on the user uttered voice being obtained, a widget corresponding to the user uttered voice among the plurality of widgets based on voice recognition with respect to the user uttered voice, and control the display to enlarge a display size of the identified widget, and display the remaining widgets among the plurality of widgets by performing a dimming process.

Further, the processor may be configured to display, based on a widget corresponding to the user uttered voice not being identified among the plurality of widgets, an additional widget corresponding to the user uttered voice, and control the display to enlarge a display size of the additional widget, and display the plurality of widgets by performing a dimming process.

In addition, the processor may be configured to control the display to provide information associated with the user uttered voice within a widget of which the display size is enlarged.

Further, a communication interface may be further included, and the memory may store at least one keyword and content corresponding respectively to the at least one keyword, and the processor may be configured to receive a message from a user terminal device through the communication interface, and control, based on a pre-set keyword being identified as included in the message, the display to display content corresponding to the pre-set keyword based on information stored in the memory.

In addition, a sensor may be further included, and the processor may be configured to receive the message and information about a user corresponding to the message from the user terminal device through the communication interface, and control, based on a user corresponding to the message being identified through the sensor, the display to display content corresponding to the pre-set keyword.

Further, the processor may be configured to identify, based on the pre-set keyword being identified as not included in the message, a widget corresponding to the message, and control the display to enlarge a display size of a widget corresponding to the message.

In addition, a sensor may be further included, and the processor may be configured to identify, based on at least one user being identified through the sensor, a widget to be displayed through the display based on the at least one user.

Further, a communication interface may be further included, and the processor may be configured to obtain channel state information (CSI) through the communication interface, and identify, based on an object being identified based on the channel state information, the at least one user by turning-on the sensor.

In addition, the sensor may be a sound sensor, and the processor may be configured to obtain sounds generated by the at least one user through the sound sensor, and identify a widget to be displayed through the display based on at least one of the current time, the obtained sounds, or a number of the at least one user.

Further, a communication interface may be further included, and the processor may be configured to identify, based on a communication channel being formed with a user terminal device through the communication interface, a widget to be displayed through the display based on the user terminal device.

In addition, a communication interface may be further included, and the processor may be configured to identify, based on weather information being received from a server through the communication interface, at least one of a widget to be displayed through the display or a display state of the widget to be displayed based on the weather information.

Meanwhile, according to an embodiment of the disclosure, a control method of an electronic apparatus includes displaying information associated with a function of an application as a widget, identifying, based on a user uttered voice being obtained, a widget corresponding to the user uttered voice based on voice recognition with respect to the user uttered voice, and changing a display state of the identified widget based on the user uttered voice.

In addition, the displaying may include displaying information associated with functions of a plurality of applications as a plurality of widgets, the identifying may include identifying, based on the user uttered voice being obtained, a widget corresponding to the user uttered voice among the plurality of widgets based on voice recognition with respect to the user uttered voice, and the changing may include enlarging a display size of the identified widget, and displaying the remaining widgets among the plurality of widgets by performing a dimming process.

Further, displaying, based on a widget corresponding to the user uttered voice not being identified among the plurality of widgets, an additional widget corresponding to the user uttered voice may be further included, and the changing may include enlarging a display size of the additional widget, and displaying the plurality of widgets by performing a dimming process.

In addition, the changing may include providing information associated with the user uttered voice within a widget of which the display size is enlarged.

Further, receiving a message from a user terminal device and displaying, based on a pre-set keyword being identified as included in the message, content corresponding to the pre-set keyword may be further included.

In addition, the receiving may include receiving the message and information about a user corresponding to the message from the user terminal device, and the displaying content may include displaying, based on a user corresponding to the message being identified, content corresponding to the pre-set keyword.

Further, identifying, based on the pre-set keyword being identified as not included in the message, a widget corresponding to the message and enlarging a display size of a widget corresponding to the message may be further included.

In addition, identifying, based on at least one user being identified, a widget to be displayed based on the at least one user may be further included.

Further, obtaining channel state information (CSI) and identifying, based on an object being identified based on the channel state information, the at least one user by turning-on a sensor included in the electronic apparatus may be further included.

In addition, the identifying a widget to be displayed may include obtaining sounds generated by the at least one user, and identifying the widget to be displayed based on at least one of the current time, the obtained sounds, or a number of the at least one user.

Further, identifying, based on a communication channel being formed with a user terminal device, a widget to be displayed based on the user terminal device may be further included.

In addition, identifying, based on weather information being received from a server, at least one of a widget to be displayed or a display state of the widget to be displayed based on the weather information may be further included.

### [Description of Drawings]

FIG. 1A and FIG. 1B are diagrams illustrating an electronic apparatus of prior art to assist in the understanding of the disclosure;
FIG. 2 is a block diagram illustrating a configuration of an electronic apparatus according to an embodiment of the disclosure;
FIG. 3 is a block diagram illustrating a detailed configuration of an electronic apparatus according to an embodiment of the disclosure;
FIG. 4 is a diagram illustrating a screen on which a widget is displayed according to an embodiment of the disclosure;
FIG. 5 is a diagram illustrating an operation based on a user uttered voice according to an embodiment of the disclosure;
FIG. 6 is a diagram illustrating a method for identifying a widget to be displayed according to an embodiment of the disclosure;
FIG. 7 to FIG. 9 are diagrams illustrating an operation based on an identification of a user according to an embodiment of the disclosure;
FIG. 10 is a diagram illustrating a method for identifying a widget based on context according to an embodiment of the disclosure;
FIG. 11 is a diagram illustrating a method for identifying a widget based on a user terminal device according to an embodiment of the disclosure;
FIG. 12 and FIG. 13 are diagrams illustrating a method for identifying a widget based on sound according to an embodiment of the disclosure;
FIG. 14 is a diagram illustrating a method for identifying a widget to be displayed based on a user pattern according to an embodiment of the disclosure;
FIG. 15 is a diagram illustrating an operation based on a message that includes a pre-set keyword according to an embodiment of the disclosure;
FIG. 16 is a diagram illustrating a method for providing weather information according to an embodiment of the disclosure;
FIG. 17 is a diagram illustrating a change in screen configuration according to an embodiment of the disclosure; and
FIG. 18 is a flowchart illustrating a control method of an electronic apparatus according to an embodiment of the disclosure.

### [Mode for Invention]

An object of the disclosure is in providing an electronic apparatus for adaptively displaying a widget, and providing various utilization methods that takes into consideration user convenience and a control method thereof.

The disclosure will be described in detail below with reference to the accompanying drawings.

Terms used in describing an embodiment of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the relevant description. Accordingly, the terms used herein are not to be understood simply as its designation but based on the meaning of the term and the overall context of the disclosure.

In the disclosure, expressions such as "have", "may have", "include", and "may include" are used to designate a presence of a relevant characteristic (e.g., elements such as numerical value, function, operation, or component), and not to preclude a presence or a possibility of additional characteristics.

The expression at least one of A and/or B is to be understood as indicating any one of "A" or "B" or "A and B".

Expressions such as "1st", "2nd", "first", or "second" used in the disclosure may limit various elements regardless of order and/or importance, and may be used merely to distinguish one element from another element and not limit the relevant element.

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

In the disclosure, the term "user" may refer to a person using an electronic apparatus or an apparatus (e.g., artificial intelligence electronic apparatus) using the electronic apparatus.

Various embodiments of the disclosure will be described in greater detail below with reference to the accompanied drawings.

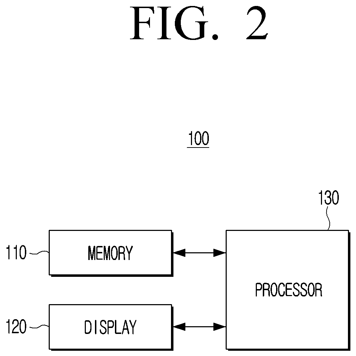

FIG. 2 is a block diagram illustrating a configuration of an electronic apparatus 100 according to an embodiment of the disclosure.

The electronic apparatus 100 may be an apparatus that displays at least one widget. For example, the electronic apparatus 100 may include a display such as a TV, a desktop PC, a notebook, a smartphone, a tablet PC, and the like, and may be an apparatus that displays at least one widget. Here, a widget may be a graphic user interface (GUI) tool for displaying a screen that includes at least one of a function or information provided by an application installed in an apparatus. For example, the widget may be a small window that includes at least one of a function or information provided by an application, and many functions that were provided through a browser such as a clock, a calendar, a memo, search, a map, news, and a real-time camera may be provided through a widget without having to open the browser.

However, the embodiment is not limited thereto, and the electronic apparatus 100 may be any apparatus so long as it is an apparatus capable of displaying at least one widget. In addition, the electronic apparatus 100 may not include a display such as a set top box (STB), and may be an apparatus providing screen information that includes at least one widget to a separate display apparatus.

Referring to FIG. 2, the electronic apparatus 100 may include memory 110, a display 120, and a processor 130.

The memory 110 may refer to a hardware that stores information such as data in electrical or magnetic form to be accessed by the processor 130 and the like. To this end, the memory 110 may be implemented as at least one hardware of a non-volatile memory, a volatile memory, a flash memory, a hard disk drive (HDD) or a solid state drive (SSD), a random access memory (RAM), a read only memory (ROM), and the like.

In the memory 110, at least one instruction required in an operation of the electronic apparatus 100 or the processor 130 may be stored. Here, an instruction may be a code unit that instructs an operation of the electronic apparatus 100 or the processor 130, and may be prepared in a machine language which is a language that can be understood by a computer. Alternatively, the memory 110 may be stored with a plurality of instructions that perform a specific work of the electronic apparatus 100 or the processor 130 as an instruction set.

The memory 110 may be stored with data which is information in a bit or byte unit that can represent a character, a number, an image, and the like. For example, the memory 110 may be stored with at least one application. In addition, the memory 110 may be stored with at least one keyword and content corresponding respectively to the at least one keyword. For example, the memory 110 may be stored with a keyword "birthday" and an image of a cake corresponding to the keyword "birthday".

The memory 110 may be accessed by the processor 130, and reading, writing, modifying, deleting, updating, and the like of the instructions, the instruction set, or data may be performed by the processor 130.

The display 120 may be a configuration that displays an image, and implemented as displays of various forms such as a liquid crystal display (LCD), an organic light emitting diode (OLED) display, and a plasma display panel (PDP). In the display 120, a driving circuit, which may be implemented in the form of an a-si TFT, a low temperature poly silicon (LTPS) TFT, an organic TFT (OTFT), or the like, a backlight unit, and the like may be included. Meanwhile, the display 120 may be implemented as a touch screen coupled with a touch sensor, a flexible display, a three-dimensional display (3D display), or the like.

The processor 130 may control the operation of the electronic apparatus 100 overall. Specifically, the processor 130 may control the operation of the electronic apparatus 100 overall by being connected with each configuration of the electronic apparatus 100. For example, the processor 130 may control the operation of the electronic apparatus 100 by being connected with configurations such as the memory 110, the display 120, and a communication interface (not shown).

One or more processors may include one or more of a central processing unit (CPU), a graphics processing unit (GPU), an accelerated processing unit (APU), a many integrated core (MIC), a neural processing unit (NPU), a hardware accelerator, or a machine learning accelerator. The one or more processors may control one or a random combination among other elements of the electronic apparatus 100, and perform an operation associated with communication or data processing. The one or more processors may execute one or more programs or instructions stored in the memory 110. For example, the one or more processors may perform, by executing one or more instructions stored in the memory 110, a method according to an embodiment of the disclosure.

When a method according to an embodiment of the disclosure includes a plurality of operations, the plurality of operations may be performed by one processor, or performed by a plurality of processors. For example, when a first operation, a second operation, and a third operation are performed by a method according to an embodiment, the first operation, the second operation, and the third operation may all be performed by a first processor, or the first operation and the second operation may be performed by the first processor (e.g., generic-purpose processor) and the third operation may be performed by a second processor (e.g., artificial intelligence dedicated processor).

The one or more processors may be implemented as a single core processor that includes one core, or implemented as one or more multicore processors that include a plurality of cores (e.g., a homogeneous multicore or a heterogeneous multicore). If the one or more processors are implemented as multicore processors, each of the plurality of cores included in the multicore processors may include the memory 110 inside the processor such as a cache memory and an on-chip memory, and a common cache shared by the plurality of cores may be included in the multicore processors. In addition, each of the plurality of cores (or a portion from among the plurality of cores) included in the multicore processors may independently read and perform a program command for implementing a method according to an embodiment of the disclosure, or read and perform a program command for implementing a method according to an embodiment of the disclosure due to a whole (or a portion) of the plurality of cores being interconnected.

When a method according to an embodiment of the disclosure includes a plurality of operations, the plurality of operations may be performed by one core among the plurality of cores or performed by the plurality of cores included in the multicore processors. For example, when a first operation, a second operation, and a third operation are performed by a method according to an embodiment, the first operation, the second operation, and the third operation may all be performed by a first core included in the multicore processors, or the first operation and the second operation may be performed by the first core included in the multicore processors and the third operation may be performed by a second core included in the multicore processors.

In the embodiments of the disclosure, the one or more processors may refer to a system on chip (SoC), a single core processor, or multicore processors in which at least one processor and other electronic components are integrated, or a core included in the single core processor or the multicore processors, and the core herein may be implemented as the CPU, the GPU, the APU, the MIC, the NPU, the hardware accelerator, the machine learning accelerator, or the like, but is not limited to the embodiments of the disclosure. However, for convenience of description below, an operation of the electronic apparatus 100 will be described using the expression 'processor 130.'

The processor 130 may control the display 120 to display information associated with a function of an application as a widget. For example, the processor 130 may control the display 120 to display weather information provided from a weather application as a widget.

The processor 130 may identify, based on a user uttered voice being obtained, a widget corresponding to the user uttered voice based on voice recognition with respect to the user uttered voice. For example, the electronic apparatus 100 may include a microphone, and the processor 130 may obtain the user uttered voice through the microphone. Alternatively, a remote control device may obtain a user uttered voice through a microphone included in the remote control device, and the electronic apparatus 100 may receive the user uttered voice from the remote control device. The processor 130 may identify, based on a user uttered voice such as "how is the weather today?" being obtained, an intent of a user through voice recognition, and identify a weather widget based on the user uttered voice requesting for weather information.

The processor 130 may control the display 120 to change a display state of the identified widget based on the user uttered voice. For example, the processor 130 may enlarge a size of the identified widget or display focus at an edge thereof. Alternatively, the processor 130 may identify the weather widget based on the user uttered voice such as "how is the weather today?" being obtained, and display information about the weather today within the weather widget.

The processor 130 may control the display 120 to display information associated with functions of a plurality of applications as a plurality of widgets, identify, based on a user uttered voice being obtained, a widget corresponding to the user uttered voice among the plurality of widgets based on voice recognition with respect to the user uttered voice, and control the display 120 to enlarge a display size of the identified widget, and display the remaining widgets among the plurality of widgets by performing a dimming process.

For example, the processor 130 may display information associated with a function of the weather application as the weather widget and display information associated with a function of a memo application as a memo widget. The processor 130 may identify, based on the user uttered voice such as "how is the weather today?" being obtained, the weather widget based on voice recognition with respect to the user uttered voice, and control the display 120 to enlarge a display size of the weather widget, and display the memo widget by performing a dimming process.

However, the embodiment is not limited thereto, and the processor 130 may control the display 120 to enlarge a display size of a widget corresponding to the user uttered voice, and reduce and display the display sizes of the remaining widgets among the plurality of widgets. Alternatively, the processor 130 may control the display 120 to display a widget corresponding to the user uttered voice among the plurality of widgets on full screen. Alternatively, the processor 130 may change a display position of the widget corresponding to the user uttered voice among the plurality of widgets. For example, alternatively, the processor 130 may control the display 120 to display the widget corresponding to the user uttered voice among the plurality of widgets by moving the same to the center of the screen. In this case, the processor 130 may change positions of the remaining widgets among the plurality of widgets based on the position at which the widget corresponding to the user uttered voice has been moved. Alternatively, the processor 130 may display the widget corresponding to the user uttered voice by moving the same to the center of the screen without moving the positions of the remaining widgets. In this case, a portion of the remaining widgets or a portion of an area may not be displayed by being obscured by the widget corresponding to the user uttered voice.

The processor 130 may display, based on the widget corresponding to the user uttered voice not being identified among the plurality of widgets, an additional widget corresponding to the user uttered voice, and control the display 120 to enlarge a display size of the additional widget, and display the plurality of widgets by performing a dimming process. For example, the processor 130 may identify, based on a user uttered voice such as "turn-on music" being obtained while the weather widget and the memo widget are displayed, a music widget corresponding to the user uttered voice is not displayed through the display 120, and additionally display the music widget. Further, the processor 130 may enlarge a display size of the music widget, and control the display 120 to display the weather widget and the memo widget by performing a dimming process.

Alternatively, the processor 130 may display the additional widget, and remove at least one display among the plurality of widgets. For example, the processor 130 may no longer display, based on adding the music widget while the weather widget and the memo widget are displayed, at least one of the weather widget and the memo widget.

The processor 130 may control the display 120 to provide information associated with the user uttered voice within the widget of which the display size is enlarged. For example, the processor 130 may enlarge the display size of the weather widget, and control the display 120 to provide today's weather information within the weather widget of which the display size is enlarged.

The electronic apparatus 100 may further include a communication interface, the memory 110 may store at least one keyword and content corresponding respectively to the at least one keyword, and the processor 130 may receive a message from a user terminal device through the communication interface, and control, based on a pre-set keyword being identified as included in the message, the display 120 to display content corresponding to the pre-set keyword based on information stored in the memory 110.

For example, the processor 130 may identify, based on a message of "today is mother's birthday" being received from a user terminal device, the pre-set keyword "birthday", and control the display 120 to display an image of a cake corresponding to "birthday".

The electronic apparatus 100 may further include a sensor, and the processor 130 may receive a message and information about a user corresponding to the message from the user terminal device through the communication interface, and control, based on the user corresponding to the message being identified through the sensor, the display 120 to display content corresponding to the pre-set keyword.

However, the embodiment is not limited thereto, and the processor 130 may obtain information about the user from the message. For example, the processor 130 may identify the pre-set keyword "birthday" when the message "today is mother's birthday" is received, identify "mother" as a user, and control the display 120 to display the image of a cake corresponding to "birthday" when "mother is identified through the sensor. Alternatively, the processor 130 may obtain, based on information about a user corresponding to the message not being received from the user terminal device, information about the user from the message or transmit a signal requesting for information about the user to the user terminal device.

The processor 130 may identify, based on the pre-set keyword being identified as not included in the message, a widget corresponding to the message, and control the display 120 to enlarge a display size of the widget corresponding to the message.

The electronic apparatus 100 may further include a sensor, and the processor 130 may identify, based on at least one user being identified through the sensor, a widget to be displayed through the display 120 based on the at least one user.

For example, the processor 130 may control the display 120 to display at least one widget frequently used by the identified user through the sensor. Alternatively, the processor 130 may control the display 120 to display at least one widget that was used last by the identified user at an identified point-in-time through the sensor. Alternatively, the processor 130 may change the widget to be displayed based on a number of users. As an example, the processor 130 may display at least one widget based on the identified user if the identified user is one person, and control the display 120 to display a public widget if the identified user is in plurality. Here, the public widget may be a widget that is not included with personal information such as the weather widget.

The electronic apparatus 100 may further include a communication interface, and the processor 130 may obtain channel state information (CSI) through the communication interface, and identify, based on an object being identified based on the channel state information, at least one user by turning-on the sensor. For example, the processor 130 may identify, based on at least one of a strength or phase of the channel state information being changed to a pre-set value or more, an object as being present between the electronic apparatus 100 and an apparatus that formed a channel with the electronic apparatus 100.

Typically, because the electronic apparatus 100 is connected to an access point, channel state information may be obtained periodically. Accordingly, the processor 130 may normally maintain the sensor in a turned-off state, and when an object is identified based on the channel state information, identify at least one user by turning-on the sensor, and through the operation described above, reduce power consumed by the sensor.

According to an embodiment, the sensor may be a sound sensor, and the processor 130 may obtain sounds generated by the at least one user through the sound sensor, and identify a widget to be displayed through the display 120 based on at least one of the current time, the obtained sounds or a number of the at least one user.

Alternatively, the electronic apparatus 100 may further include a communication interface, and the processor 130 may identify, based on a communication channel being formed with the user terminal device through the communication interface, a widget to be displayed through the display 120 based on the user terminal device. For example, the processor 130 may identify, based on a Bluetooth communication channel being formed with a smartphone, a widget to be displayed through the display 120 based on a user of the smartphone.

According to an embodiment, the electronic apparatus 100 may further include a communication interface, and the processor 130 may identify, based on weather information being received from a server through the communication interface, at least one of a widget to be displayed or a display state of the widget to be displayed through the display 120 based on the weather information.

Meanwhile, although the processor 130 has been described as identifying the widget corresponding to the user uttered voice for convenience of description above, the embodiment is not limited thereto. For example, the processor 130 may identify, based on a user uttered voice being obtained, an application based on voice recognition with respect to the obtained user uttered voice, and control the display 120 for a display state of the widget corresponding to the identified application to be changed.

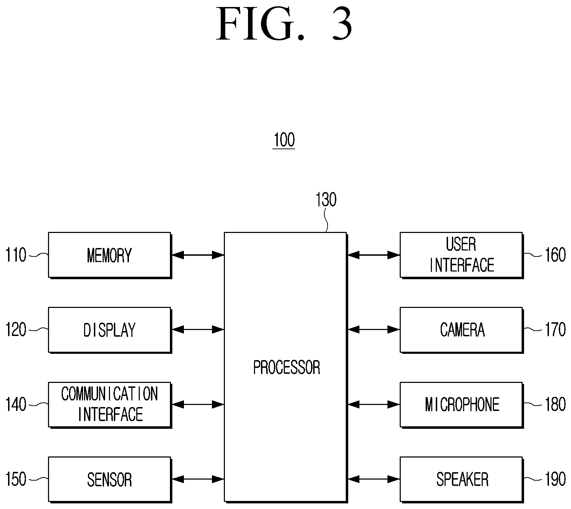

FIG. 3 is a block diagram illustrating a detailed configuration of the electronic apparatus 100 according to an embodiment of the disclosure. The electronic apparatus 100 may include the memory 110, the display 120, and the processor 130. The electronic apparatus 100 may further include a communication interface 140, a sensor 150, a user interface 160, a camera 170, a microphone 180, and a speaker 190. Detailed descriptions of parts that overlap with elements shown in FIG. 2 among the elements shown in FIG. 3 will be omitted.

The communication interface 140 may be a configuration that performs communication with external apparatuses of various types according to communication methods of various types. For example, the electronic apparatus 100 may perform communication with the user terminal device, the server, and the like through the communication interface 140.

The communication interface 140 may include a Wi-Fi module, a Bluetooth module, an infrared communication module, a wireless communication module, and the like. Here, each communication module may be implemented in at least one hardware chip form.

The Wi-Fi module and the Bluetooth module may perform communication in a Wi-Fi method and a Bluetooth method, respectively. When using the Wi-Fi module or the Bluetooth module, various connection information such as a service set identifier (SSID) and a session key may first be transmitted and received, and after communicatively connecting using the same, various information may be transmitted and received. The infrared communication module may perform communication according to an infrared communication (Infrared Data Association (IrDA)) technology of transmitting data wirelessly in short range by using infrared rays present between visible rays and millimeter waves.

The wireless communication module may include at least one communication chip that performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like, in addition to the above-described communication methods.

Alternatively, the communication interface 140 may include wired communication interfaces such as, for example, and without limitation, HDMI, DP, Thunderbolt, USB, RGB, D-SUB, DVI, and the like.

In addition thereto, the communication interface 140 may include at least one of the wired communication modules that perform communication using a local area network (LAN) module, an Ethernet module, or a pair cable, a coaxial cable, an optical fiber cable, or the like.

The sensor 150 may be a configuration for identifying a user. For example, the sensor 150 may include at least one of an image sensor or the sound sensor.

The processor 130 may obtain an image through the image sensor, and identify the user from the image. Alternatively, the processor 130 may obtain sounds through the sound sensor, and identify a user from the sounds.

However, the embodiment is not limited thereto, and the sensor 150 may be any configuration so long as it is a configuration for identifying a user.

The user interface 160 may be implemented as a button, a touch pad, a mouse, a keyboard, and the like or implemented also as a touch screen capable of performing a display function and an operation input function together therewith. Here, the button may be buttons of various types such as a mechanical button, a touch pad, or a wheel which are formed at random areas at a front surface part or a side surface part, a rear surface part, or the like of an exterior of a main body of the electronic apparatus 100.

The camera 170 may be a configuration for capturing a still image or a moving image. The camera 170 may capture a still image at a specific point-in-time, but may also capture still images consecutively. The camera 170 may capture at least one direction of the electronic apparatus100.

The camera 170 may include a lens, a shutter, an aperture, a solid-state imaging device, an Analog Front End (AFE), and a Timing Generator (TG). The shutter may adjust a time during which light reflected from a subject enters the camera 170, and the aperture may adjust an amount of light incident to the lens by mechanically increasing or decreasing a size of an opening part through which light enters. The solid-state imaging device may output, based on light reflected from the subject being accumulated as photo charge, an image by the photo charge as an electrical signal. The TG may output a timing signal for reading out pixel data of the solid-state imaging device, and the AFE may digitalize the electrical signal output from the solid-state imaging device by sampling.

The microphone 180 may be a configuration for receiving sound and converting to an audio signal. The microphone 180 may be electrically connected with the processor 130, and may receive sound by control of the processor 130.

For example, the microphone 180 may be formed as an integrated-type integrated to an upper side or a front surface direction, a side surface direction or the like of the electronic apparatus 100. Alternatively, the microphone 180 may be provided in a remote control device, or the like separate from the electronic apparatus 100. In this case, the remote control device may receive sound through the microphone 180, and provide the received sound to the electronic apparatus 100.

The microphone 180 may include various configurations such as a microphone that collects sound in an analog form, an amplifier circuit that amplifies the collected sound, an A/D converter circuit that samples the amplified sound and converts to a digital signal, a filter circuit that removes noise components from the converted digital signal, and the like.

Meanwhile, the microphone 180 may be implemented in a form of a sound sensor, and may be any method so long as it is a configuration that can collect sound.

The speaker 190 may be an element that outputs not only various audio data processed in the processor 130, but also various notification sounds, voice messages, or the like.

As described above, the electronic apparatus 100 may adaptively display a widget based on a user, and raise user convenience by emphasizing the widget corresponding to a user uttered voice.

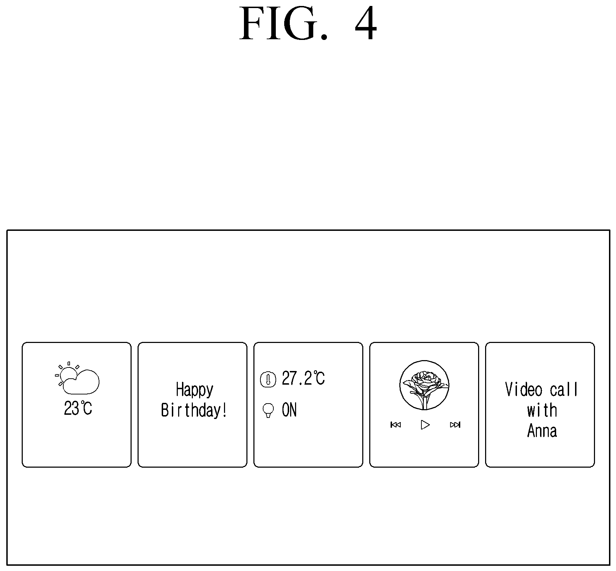

Operations of the electronic apparatus 100 will be described in greater detail below through FIG. 4 to FIG. 17. In FIG. 4 to FIG. 17, individual embodiments will be described for convenience of description. However, the individual embodiments in FIG. 4 to FIG. 17 may be implemented in any combined state.

FIG. 4 is a diagram illustrating a screen on which a widget is displayed according to an embodiment of the disclosure.

The processor 130 may control the display 120 to display information associated with a function of an application as a widget. For example, the processor 130 may control the display 120 to display information associated with functions of a plurality of applications as a plurality of widgets as shown in FIG. 4. As an example, a first widget from the left of five widgets in FIG. 4 may include information associated with a weather information providing function of the weather application, a second widget from the left may include information associated with a memo function of the memo application, a third widget from the left may include information associated with a home control function of a smart home application, a fourth widget from the left may include information associated with a music playback function of a music application, and a fifth widget from the left may include information associated with a call function of a call application.

In FIG. 4, for convenience of description, five widgets have been shown, but is not limited thereto, and a number of widgets displayed may be any various number. In addition, types of widgets displayed, display positions, display sizes, and the like may be varied.

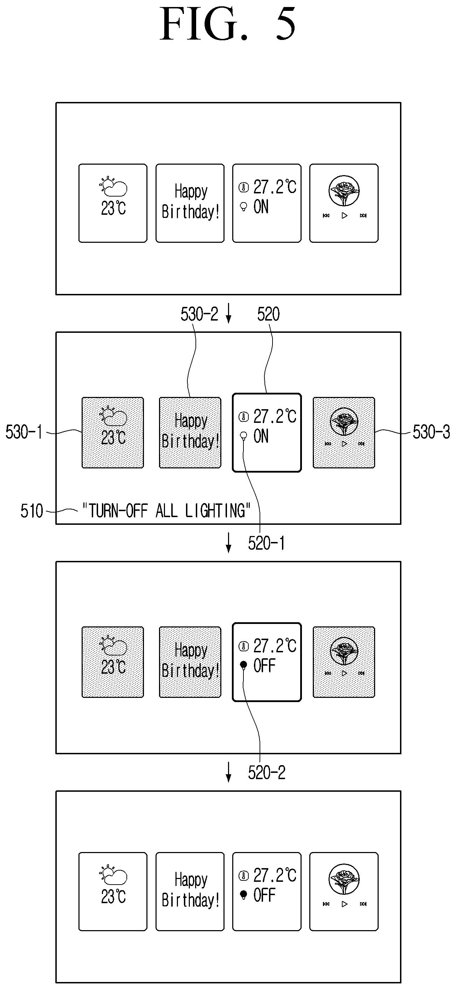

FIG. 5 is a diagram illustrating an operation based on a user uttered voice according to an embodiment of the disclosure.

The processor 130 may control the display 120 to display information associated with functions of the plurality of applications as the plurality of widgets. For example, the processor 130 may control the display 120 to display information associated with functions of each of the weather application, the memo application, the smart home application, and the music application as the weather widget, the memo widget, a smart home widget, and the music widget as in the first drawing of FIG. 5.

The processor 130 may identify, based on a user uttered voice being obtained, a widget corresponding to the user uttered voice among the plurality of widgets based on voice recognition with respect to the user uttered voice, and control the display 120 to enlarge the display size of the identified widget, and display the remaining widgets among the plurality of widgets by performing a dimming process. For example, the processor 130 may identify, based on a user uttered voice 510 such as "turn-off all lighting" being obtained as in the second drawing of FIG. 5, a smart home widget 520 based on voice recognition with respect to "turn-off all lighting", enlarge a display size of the smart home widget 520, and perform dimming process of a weather widget 530-1, a memo widget 530-2, and a music widget 530-3.

The processor 130 may control the display 120 to provide information associated with the user uttered voice within the widget of which the display size is enlarged. In the above-described example, the processor 130 may turn-off all lighting within a home based on the user uttered voice of "turn-off all lighting", and change an icon 520-1 indicating that a lighting of the smart home widget 520 is in an ON-state to an icon 520-2 indicating that the lighting of the smart home widget 520 is in an OFF-state.

The processor 130 may reduce, based on an additional user uttered voice not being received for a pre-set time after changing the display states of the plurality of widgets, a display size of a widget corresponding to the user uttered voice, and release the dimming process of the remaining widgets among the plurality of widgets.

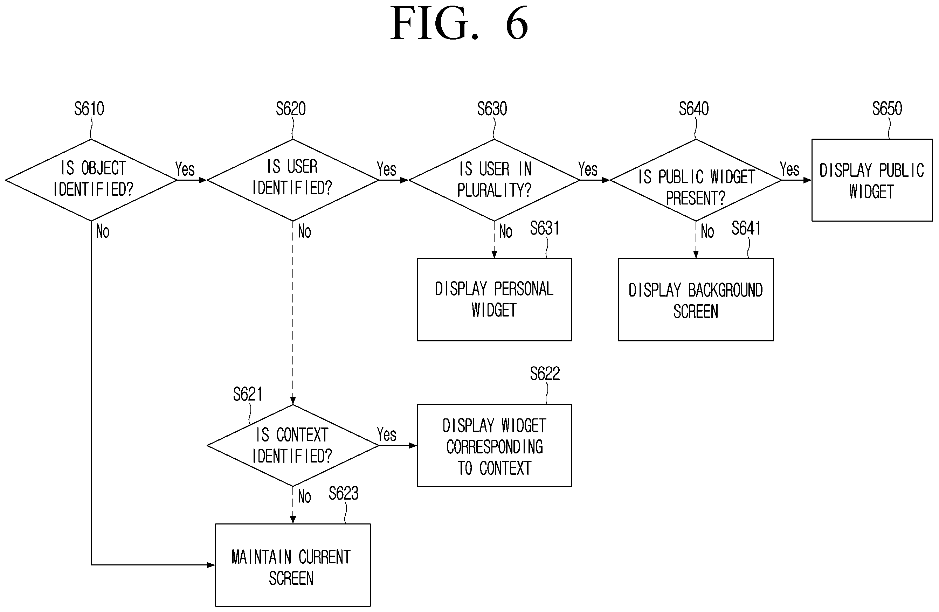

FIG. 6 is a diagram illustrating a method for identifying a widget to be displayed according to an embodiment of the disclosure.

First, the processor 130 may identify a presence of an object (S610). For example, the processor 130 may obtain the channel state information through the communication interface 140, and identify the object based on the channel state information. However, the embodiment is not limited thereto, and the processor 130 may identify the presence of an object through a separate sensor. For example, the processor 130 may identify the presence of an object through an infrared sensor, and may use any method so long as it is a method capable of simply identifying a presence of an object that was not present.

The processor 130 may maintain a current screen if the object is not identified (S623), and identify a user if the object is identified (S620). For example, the processor 130 may identify who the user is through the camera 170, the speaker 190, and the like if the object is identified.

The processor 130 may identify context if the user is not identified (S621), maintain the current screen if the context is not identified (S623), and if the context is identified, display a widget corresponding to the identified content (S622). For example, the processor 130 may display, based on a user not being identified, but puppy being identified, a widget corresponding to the puppy.

The processor 130 may identify, based on a user being identified, whether the user is in plurality (S630), and display, based on the user not being in plurality, a personal widget (S631). The processor 130 may identify whether a public widget is present if the user is in plurality (S640), display a background screen if the public widget is not present (S641), and display the public widget if the public widget is present (S650).

In FIG. 6, only the widget to be displayed has been described for convenience of description, but the embodiment is not limited thereto. For example, the processor 130 may display a personal background screen if the personal widget is displayed, and display a public background screen if the public widget is displayed.

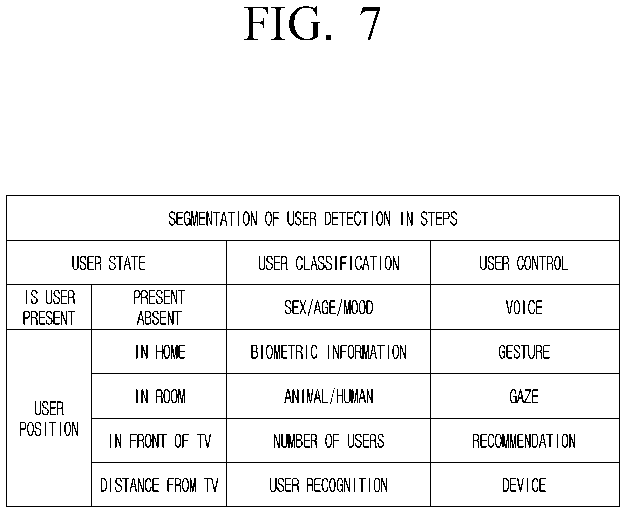

FIG. 7 to FIG. 9 are diagrams illustrating an operation based on an identification of a user according to an embodiment of the disclosure.

The processor 130 may obtain information about a user through at least one sensor. For example, the processor 130 may identify, based on a user uttered voice being identified through the microphone 180, a presence or absence, sex, age, mood, and the like of a user based on the user uttered voice as shown in FIG. 7. Alternatively, the processor 130 may identify a gesture of the user through the camera 170, and identify a position and the like of the user based on the gesture. Alternatively, the processor 130 may identify a position of the user terminal device through the communication interface, and identify the presence of a user based on the user terminal device.

However, the embodiment is not limited to the operations shown in FIG. 7, and the processor 130 may obtain information and the like about the user using any various method. In addition, using the method as illustrated in FIG. 7, information about an object rather than a user may be obtained. As an example, the processor 130 may obtain sounds of a puppy barking.

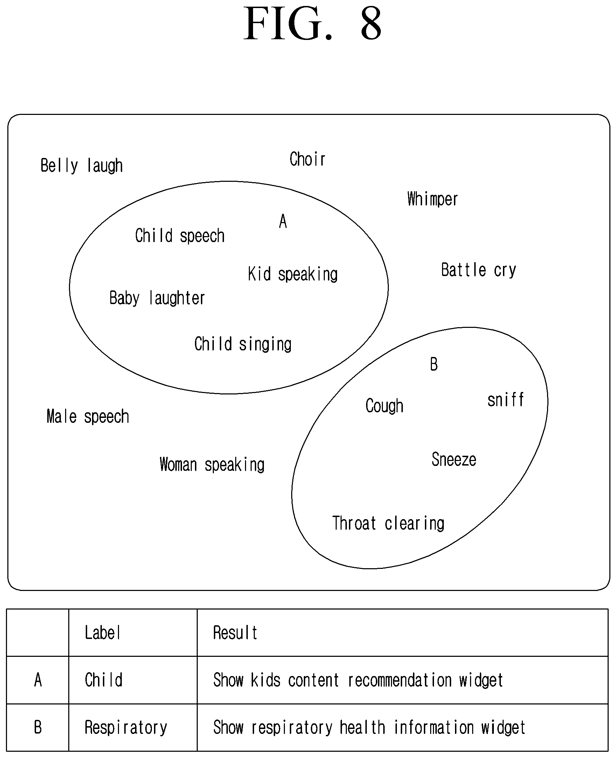

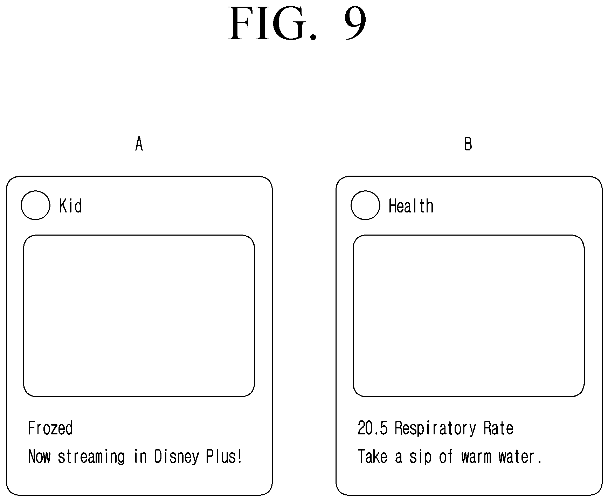

The processor 130 may identify information about an object based on information obtained through the at least one sensor. For example, the processor 130 may identify, as shown at the upper end of FIG. 8, a child corresponding to group A based on information corresponding to group A, and identify information relating to 'respiratory' corresponding to group B based on information corresponding to group B. In this case, the processor 130 may provide, as shown in FIG. 9, content associated with kids based on a child corresponding to group A, or provide content associated with a respiratory rate based on information about 'respiratory' corresponding to group B. Alternatively, the processor 130 may display a widget for recommending related content.

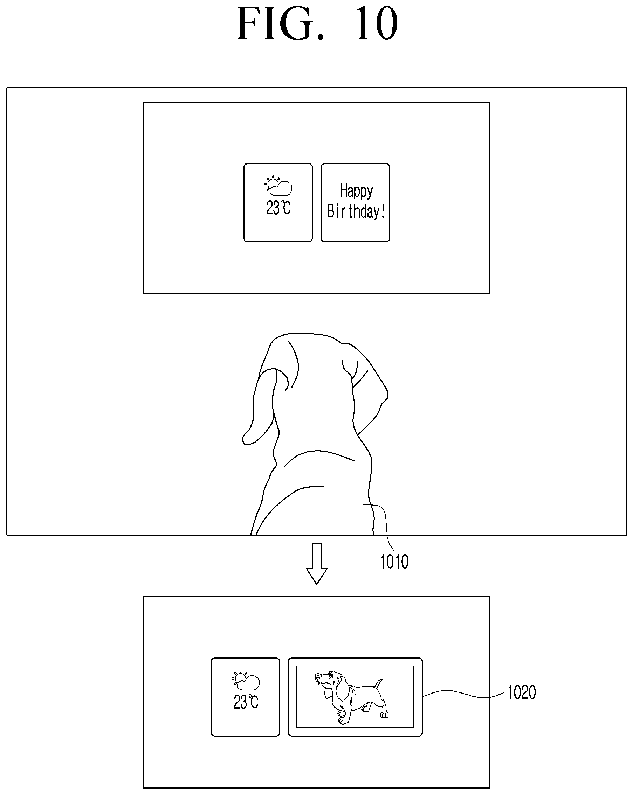

FIG. 10 is a diagram illustrating a method for identifying a widget based on context according to an embodiment of the disclosure.

The processor 130 may obtain sounds through the microphone 180. For example, the processor 130 may obtain, as shown in FIG. 10, sounds of a puppy 1010 barking rather than a user uttered voice as sounds. In this case, the processor 130 may display a pet care widget 1020. In addition, the processor 130 may enlarge a size of the pet care widget 1020, and display the remaining widgets by performing the dimming process.

The processor 130 may identify, based on sounds of a plurality of types being obtained, a priority order between the sounds of the plurality of types, and identify a widget to be displayed based on sounds with a high priority order.

For example, the processor 130 may identify, based on the user uttered voice and sounds of the puppy 1010 barking being obtained, the user uttered voice as having a higher priority order than the sounds of the puppy 1010 barking, and identify a widget to be displayed based on the user uttered voice.

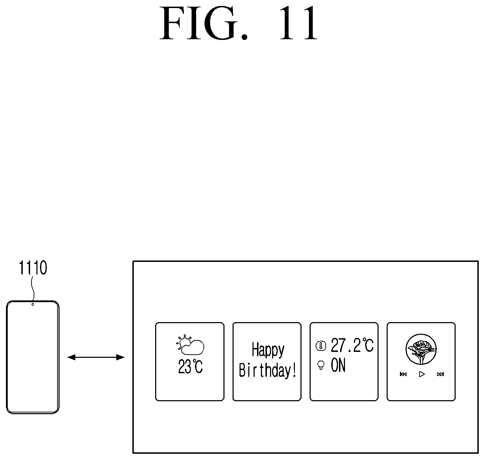

FIG. 11 is a diagram illustrating a method for identifying a widget based on a user terminal device according to an embodiment of the disclosure.

The processor 130 may identify, based on a communication channel being formed with the user terminal device through the communication interface 140, a widget to be displayed through the display 120 based on the user terminal device.

For example, the processor 130 may identify, based on a communication channel being formed with a user terminal device 1110 through the communication interface 140, a widget to be displayed through the display 120 based on the user terminal device 1110. Alternatively, the processor 130 may identify, based on the communication channel being formed with the user terminal device 1110 through the communication interface 140, a user of the user terminal device 1110, and identify a widget to be displayed through the display 120 based on the identified user.

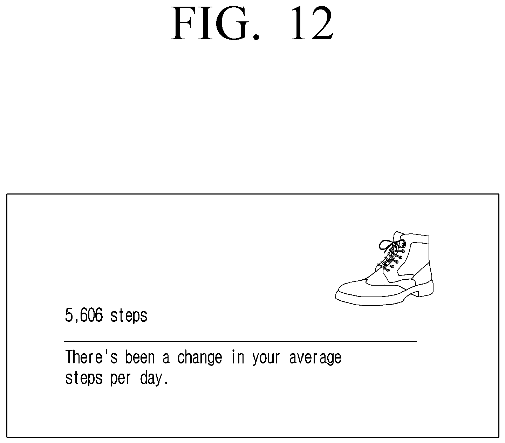

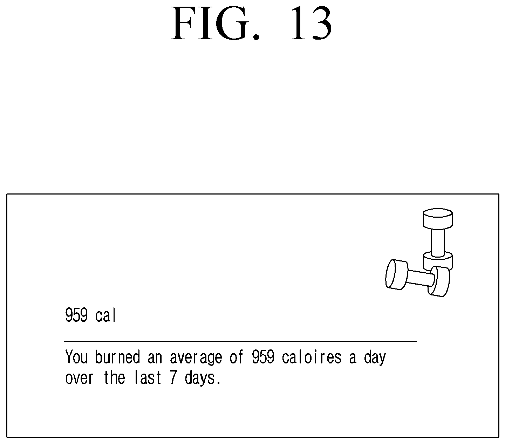

FIG. 12 and FIG. 13 are diagrams illustrating a method for identifying a widget based on sound according to an embodiment of the disclosure.

The processor 130 may identify a widget to be displayed based on sounds obtained through the microphone 180.

For example, the processor 130 may identify, based on the sounds obtained through the microphone 180 being the user uttered voice, a widget corresponding to the user uttered voice based on voice recognition with respect to the user uttered voice.

Alternatively, the processor 130 may identify the widget corresponding to a type of sound based on the types of sound obtained through the microphone 180. For example, the processor 130 may identify, based on performing voice recognition with respect to the sounds obtained through the microphone 180, but the voice recognition not having been performed, the type of sound through a neural network model. As an example, the processor 130 may identify, based on the type of sound identified through the neural network model being sounds of walking as shown in FIG. 12, a walking widget as the widget to be displayed. Alternatively, the processor 130 may identify, based on the type of sound identified through the neural network model being sounds of exercising as shown in FIG. 13, a calorie widget as the widget to be displayed. Here, the neural network model may be a model trained to identify the type of sound based on sound.

Functions associated with artificial intelligence according to the disclosure may be operated through the processor 130 and the memory 110.

The processor 130 may be configured as one or a plurality of processors. At this time, the one or plurality of processors may be a generic-purpose processor such as the CPU, the AP, the DSP, and the like, a graphics dedicated processor such as the GPU and a vision processing unit (VPU), or an artificial intelligence dedicated processor such as the NPU.

The one or plurality of processors may control for the input data to be processed according to a pre-defined operation rule or the artificial intelligence model stored in the memory 110. Alternatively, if the one or plurality of processors is an artificial intelligence dedicated processor, the artificial intelligence dedicated processor may be designed in a hardware structure specializing in the processing of a specific artificial intelligence model. The pre-defined operation rule or the artificial intelligence model may be characterized by being created through learning.

The being created through learning referred herein refers to the pre-defined operation rule or artificial intelligence model set to perform a desired feature (or, purpose) being created as a basic artificial intelligence model is trained by a learning algorithm using a plurality of training data. The training may be carried out in an apparatus itself in which the artificial intelligence according to the disclosure is performed, or carried out through a separate server and/or system. Examples of the learning algorithm may include a supervised learning, an unsupervised learning, a semi-supervised learning, or a reinforcement learning, but is not limited to the above-described examples.

The artificial intelligence model may be configured of a plurality of neural network layers. Each of the neural network layers may include a plurality of weight values, and perform a neural network processing through processing between a processing result of a previous layer and the plurality of weight values. The plurality of weight values included in the plurality of neural network layers may be optimized by a training result of the artificial intelligence model. For example, the plurality of weight values may be updated for a loss value or a cost value obtained by the artificial intelligence model during the training process to be reduced or minimized. The artificial neural network may include a Deep Neural Network (DNN), and examples thereof may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep-Q Networks, or the like, but the embodiment is not limited to the above-described examples.

The artificial neural network may include a Deep Neural Network (DNN), and examples thereof may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Generative Adversarial Network (GAN), a Deep-Q Networks, or the like, but the embodiment is not limited thereto.

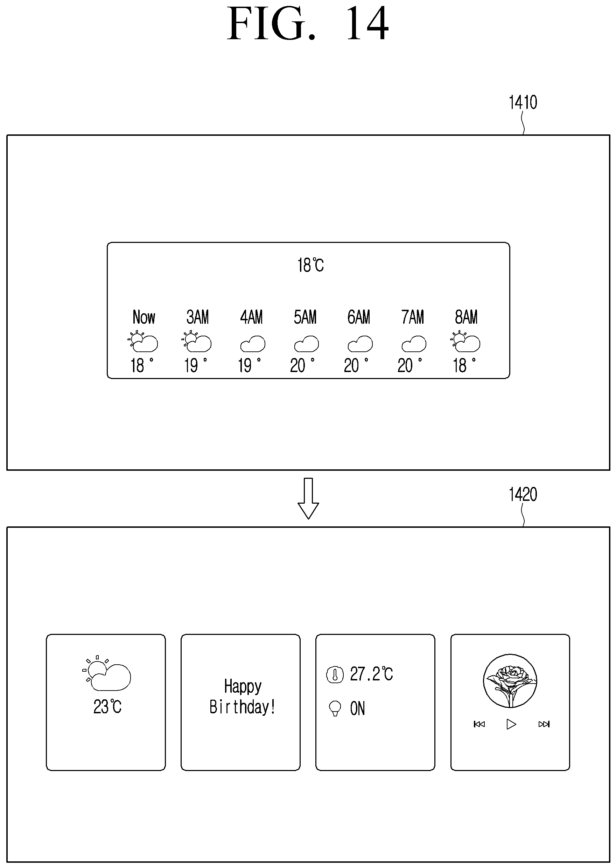

FIG. 14 is a diagram illustrating a method for identifying a widget to be displayed based on a user pattern according to an embodiment of the disclosure.

The processor 130 may learn a widget use pattern of a user as a user pattern, and identify a widget to be displayed based on the user pattern.

For example, the processor 130 may learn the widget use pattern of the user for each time period as the user pattern, and display a screen 1410 that includes a daytime weather widget for a first time period based on the user pattern, and display a screen 1420 that includes the weather widget, the memo widget, the smart home widget, and the music widget when a second time period arrives immediately after the first time period.

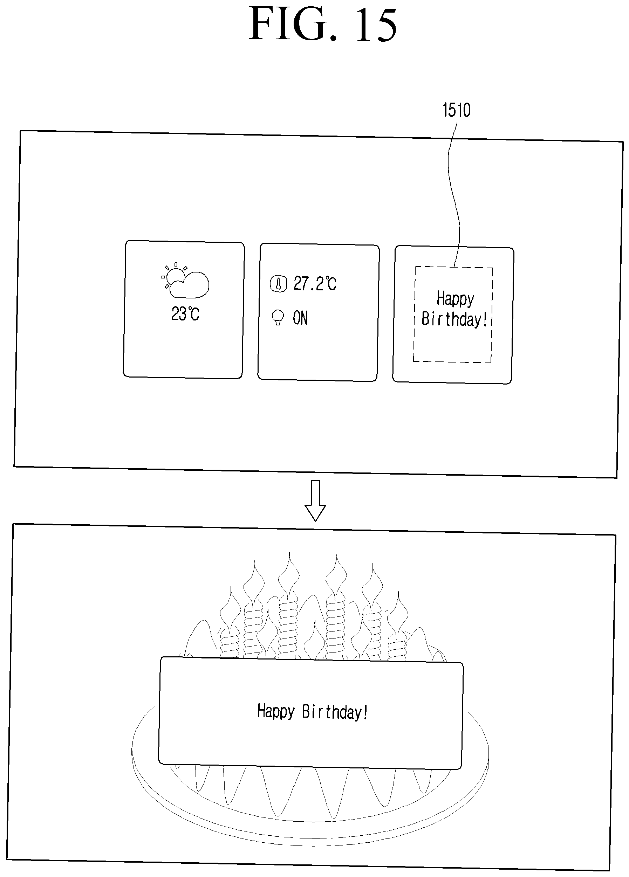

FIG. 15 is a diagram illustrating an operation based on a message that includes a pre-set keyword according to an embodiment of the disclosure.

The processor 130 may receive a message from the user terminal device through the communication interface 140, and control, based on the pre-set keyword being identified as included in the message, the display 120 to display content corresponding to the pre-set keyword.

For example, the processor 130 may control, based on a message 1510 such as "Happy Birthday" being received as shown in FIG. 15, the display 120 to display content corresponding to "Happy Birthday" and "Happy Birthday" as a text because the pre-set word "Happy Birthday" is included in the message.

The processor 130 may receive the message and information about the user corresponding to the message from the user terminal device through the communication interface 140, and control, based on a user corresponding to the message being identified through the sensor, the display 120 to display content corresponding to the pre-set keyword. In the above-described example, the processor 130 may receive "Happy Birthday" and information about a son who is the subject of "Happy Birthday". In this case, the processor 130 may control, based on the son being identified, the display 120 to display content corresponding to "Happy Birthday" and "Happy Birthday" as a text because the pre-set keyword "Happy Birthday" is included in the message.

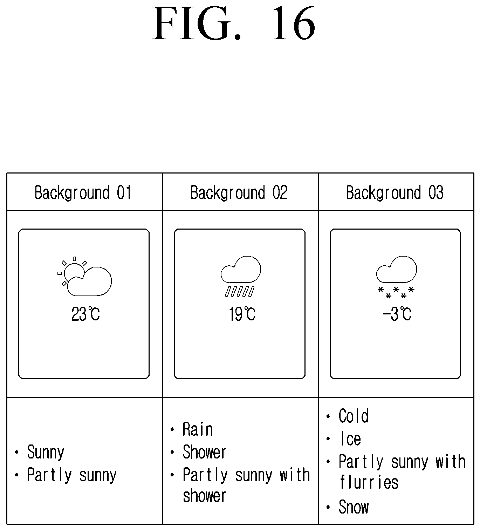

FIG. 16 is a diagram illustrating a method for providing weather information according to an embodiment of the disclosure.

The processor 130 may identify, based on weather information being received from the server through the communication interface 140, at least one of a widget to be displayed through the display 120 or a display state of the widget to be displayed based on the weather information.

For example, the processor 130 may receive one among a plurality of weather information shown in FIG. 16, and identify at least one of a widget to be displayed through the display 120 or a display state of the widget to be displayed based on the weather information.

The processor 130 may request, based on a user uttered voice not being identified for a pre-set time or a user not being identified for a pre-set time, weather information to the server. Alternatively, the processor 130 may request the weather information to the server at a pre-set point-in-time.

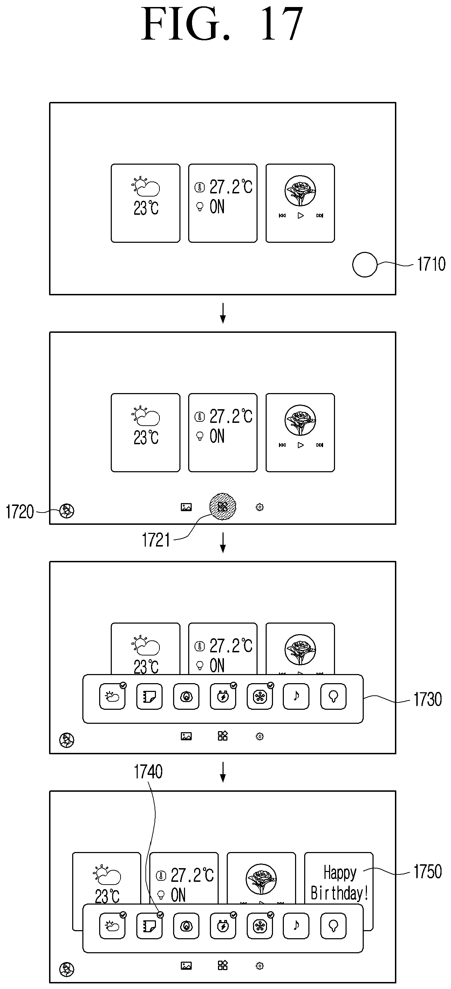

FIG. 17 is a diagram illustrating a change in screen configuration according to an embodiment of the disclosure.

The processor 130 may display an edit button 1710 as shown in the first drawing of FIG. 17.

The processor 130 may enter into an edit mode if the edit button 1710 is operated, and display an icon 1720 that indicates being in the edit mode and an icon for editing.

The processor 130 may display, based on one icon 1721 among a plurality of icons being selected for editing, an editing tap 1730 which includes providable widgets.

The processor 130 may display an additional widget 1750 if one 1740 among the providable widgets is selected.

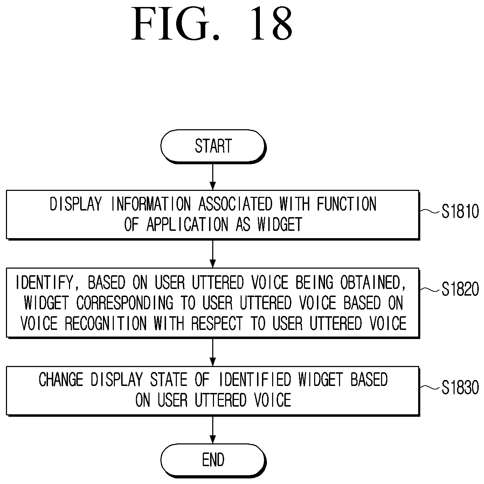

FIG. 18 is a flowchart illustrating a control method of an electronic apparatus according to an embodiment of the disclosure.

First, information associated with a function of an application may be displayed as a widget (S1810). Then, if a user uttered voice is obtained, a widget corresponding to the user uttered voice may be identified based on voice recognition with respect to the user uttered voice (S1820). Then, a display state of the identified widget may be changed based on the user uttered voice (S1830).

In addition, the displaying (S1810) may include displaying information associated with functions of the plurality of applications as the plurality of widgets, the identifying (S1820) may include identifying, based on the user uttered voice being obtained, the widget corresponding to the user uttered voice among the plurality of widgets based on voice recognition with respect to the user uttered voice, and the changing (S1830) may include enlarging the display size of the identified widget, and displaying the remaining widgets among the plurality of widgets by performing the dimming process.

Further, if the widget corresponding to the user uttered voice is not identified among the plurality of widgets, displaying the additional widget corresponding to the user uttered voice may be further included, and the changing (S1830) may include enlarging the display size of the additional widget, and displaying the plurality of widgets by performing the dimming process.

In addition, the changing (S1830) may include providing information associated with the user uttered voice within the widget of which the display size is enlarged.

Then, based on the receiving the message from the user terminal device and displaying, based on the pre-set keyword being identified as included in the message, content corresponding to the pre-set keyword may be further included.

In addition, the receiving may include receiving the message from the user terminal device and information about the user corresponding to the message, and displaying, based on the user corresponding to the message being identified, content corresponding to the pre-set keyword.

Then, the identifying, based on the pre-set keyword being identified as not included in the message, the widget corresponding to the message and enlarging the display size of the widget corresponding to the message may be further included.

In addition, identifying, based on at least one user being identified, the widget to be displayed based on the at least one user may be further included.

Further, obtaining the channel state information (CSI) and identifying, based on the object being identified based on the channel state information, at least one user by turning-on the sensor included in the electronic apparatus may be further included.

In addition, the identifying the widget to be displayed may include obtaining sounds generated by at least one user, and identifying the widget to be displayed based on at least one of the current time, the obtained sounds, or the number of at least one user.

Then, identifying, based on the communication channel being formed with the user terminal device, the widget to be displayed based on the user terminal device may be further included.

In addition, identifying, based on the weather information being received from the server, at least one of the widget to be displayed or the display state of the widget to be displayed based on the weather information may be further included.

According to the various embodiments of the disclosure as described above, the electronic apparatus may adaptively display widgets based on the user, and raise user convenience by emphasizing the widget corresponding to the user uttered voice.

Meanwhile, computer instructions for performing processing operations of the apparatus according to the various embodiments described above may be stored in a non-transitory computer-readable medium. The computer instructions stored in this non-transitory computer-readable medium may cause a specific apparatus to perform a processing operation in apparatuses according to the above-described various embodiments when executed by a processor of the specific apparatus. The non-transitory computer-readable medium may refer to a medium that stores data semi-permanently rather than storing data for a very short time, such as a register, a cache, memory, or the like, and is readable by an apparatus. Specific examples of the non-transitory computer-readable medium may include, for example, and without limitation, a compact disc (CD), a digital versatile disc (DVD), a hard disc, a Blu-ray disc, a USB, a memory card, a ROM, and the like.

In addition, each of the elements (e.g., module or program) according to various embodiments described above may be configured as a single entity or a plurality of entities, and a portion of sub-elements of the above-mentioned sub-elements may be omitted or other sub-elements may be further included in the various embodiments. Alternatively or additionally, a portion of elements (e.g., modules or programs) may be integrated into one entity to perform the same or similar functions performed by each of the relevant elements prior to integration. Operations performed by a module, a program, or other element, in accordance with the various embodiments, may be executed sequentially, in parallel, repetitively, or in a heuristically manner, or at least a portion of operations may be performed in a different order, omitted, or a different operation may be added.

While the disclosure has been illustrated and described with reference to example embodiments thereof, it will be understood that the embodiments are intended to be illustrative, not limiting. It will be understood by those skilled in the art that various changes in form and details may be made therein without departing from the true spirit and full scope of the disclosure, including the appended claims and their equivalents.

## Claims

1. An electronic apparatus, comprising:
memory stored with an application;
a display; and
one or more processors configured to control the electronic apparatus by being connected to the memory and the display,
wherein the processor is configured to:
control the display to display information associated with a function of the application as a widget,
identify, based on a user uttered voice being obtained, a widget corresponding to the user uttered voice based on voice recognition with respect to the user uttered voice, and
control the display to change a display state of the identified widget based on the user uttered voice.

2. The electronic apparatus of claim 1,
wherein the memory is configured to store a plurality of applications, and
wherein the processor is configured to:
control the display to display information associated with functions of the plurality of applications as a plurality of widgets,
identify, based on the user uttered voice being obtained, a widget corresponding to the user uttered voice among the plurality of widgets based on voice recognition with respect to the user uttered voice, and
control the display to enlarge a display size of the identified widget, and display the remaining widgets among the plurality of widgets by performing a dimming process.

3. The electronic apparatus of claim 2,
wherein the processor is configured to:
display, based on a widget corresponding to the user uttered voice not being identified among the plurality of widgets, an additional widget corresponding to the user uttered voice, and
control the display to enlarge a display size of the additional widget, and display the plurality of widgets by performing a dimming process.

4. The electronic apparatus of claim 2,
wherein the processor is configured to:
control the display to provide information associated with the user uttered voice within a widget of which the display size is enlarged.

5. The electronic apparatus of claim 1, further comprising:
a communication interface,
wherein the memory stores at least one keyword and content corresponding respectively to the at least one keyword, and
wherein the processor is configured to:
receive a message from a user terminal device through the communication interface, and
control, based on a pre-set keyword being identified as comprised in the message, the display to display content corresponding to the pre-set keyword based on information stored in the memory.

6. The electronic apparatus of claim 5, further comprising:
a sensor,
wherein the processor is configured to:
receive the message and information about a user corresponding to the message from the user terminal device through the communication interface, and
control, based on a user corresponding to the message being identified through the sensor, the display to display content corresponding to the pre-set keyword.

7. The electronic apparatus of claim 5,
wherein the processor is configured to:
identify, based on the pre-set keyword being identified as not comprised in the message, a widget corresponding to the message, and
control the display to enlarge a display size of a widget corresponding to the message.

8. The electronic apparatus of claim 1, further comprising:
a sensor,
wherein the processor is configured to identify, based on at least one user being identified through the sensor, a widget to be displayed through the display based on the at least one user.

9. The electronic apparatus of claim 8, further comprising:
a communication interface,
wherein the processor is configured to:
obtain channel state information (CSI) through the communication interface, and
identify, based on an object being identified based on the channel state information, the at least one user by turning-on the sensor.

10. The electronic apparatus of claim 8,
wherein the sensor is a sound sensor, and
wherein the processor is configured to:
obtain sounds generated by the at least one user through the sound sensor, and
identify a widget to be displayed through the display based on at least one of the current time, the obtained sounds, or a number of the at least one user.

11. The electronic apparatus of claim 1, further comprising:
a communication interface,
wherein the processor is configured to:
identify, based on a communication channel being formed with a user terminal device through the communication interface, a widget to be displayed through the display based on the user terminal device.

12. The electronic apparatus of claim 1, further comprising:
a communication interface,
wherein the processor is configured to:
identify, based on weather information being received from a server through the communication interface, at least one of a widget to be displayed through the display or a display state of the widget to be displayed based on the weather information.

13. A control method of an electronic apparatus, the method comprising:
displaying information associated with a function of an application as a widget;
identifying, based on a user uttered voice being obtained, a widget corresponding to the user uttered voice based on voice recognition with respect to the user uttered voice; and
changing a display state of the identified widget based on the user uttered voice.

14. The method of claim 13,
wherein the displaying comprises displaying information associated with functions of a plurality of applications as a plurality of widgets,
wherein the identifying comprises identifying, based on the user uttered voice being obtained, a widget corresponding to the user uttered voice among the plurality of widgets based on voice recognition with respect to the user uttered voice, and
wherein the changing comprises enlarging a display size of the identified widget, and displaying the remaining widgets among the plurality of widgets by performing a dimming process.

15. The method of claim 14, further comprising:
displaying, based on a widget corresponding to the user uttered voice not being identified among the plurality of widgets, an additional widget corresponding to the user uttered voice,
wherein the changing comprises enlarging a display size of the additional widget, and displaying the plurality of widgets by performing a dimming process.
